(19) Europäisches Patentamt
European Patent Office
Office européen des brevets

(11) **EP 3 035 254 A1**

(12) **EUROPEAN PATENT APPLICATION**

(43) Date of publication:
**22.06.2016 Bulletin 2016/25**

(51) Int Cl.:
***G06Q 10/04*** *(2012.01)*

(21) Application number: **14198876.6**

(22) Date of filing: **18.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Stichting IMEC Nederland**
**5656 AE Eindhoven (NL)**

(72) Inventors:
• **Catthoor, Francky**
  **3001 Leuven (BE)**
• **Rodopoulos, Dimitrios**
  **3001 Leuven (BE)**
• **Soudris, Dimitrios**
  **3001 Leuven (BE)**

(74) Representative: **DenK iP**
**Hundelgemsesteenweg 1114**
**9820 Merelbeke (BE)**

(54) **Method of managing the operation of an electronic system with a guaranteed lifetime**

(57) The present invention relates to a method of managing the operation of a digital synchronous electronic system with a guaranteed lifetime, using digital processing means, by exploiting task information of a dynamic application running on the electronic system, said task information being derived from a system model. The system model comprises both
- deterministic upper bound curves of one or more guaranteed objectives in a multi-dimensional design space as a function of time evolution of tasks of the application, said upperbound curves being parametric with parameters including the application workload and environmental conditions, and
- probabilistic or analytical estimates of one or more cost functions of the time evolution of the tasks of the application, said estimates being parameterized the application workload and environmental conditions.

The method comprises :
- monitoring at run time the electronic system, while the electronic system executes in a current system working mode a set of tasks of the application currently running on the electronic system,
- detecting a violation in the electronic system, said violation affecting the one or more guaranteed objectives and/or the one or more cost functions,
- selecting at least one condition for revising the current system working mode of the electronic system and, if the at least one condition is met, selecting a revised system working mode for continued execution of the set of application tasks while remaining within limits imposed by the upper bound curves, while reducing a parametric error rate as a function of said parameters, whereby the revised system working mode is selected among a set of possible system working modes based on a prediction of future application workload and/or environmental conditions.

```
┌─────────────────────┐   ┌─────────────────────┐
│ Worst-case device   │   │ Worst-case wire     │
│ (e.g. BTI) Impact(Vt)│  │ (e.g. TDDB) Impact(R,C)│
└─────────────────────┘   └─────────────────────┘
           ⇩                         ⇩
┌───────────────────────────────────────────────┐
│ Worst-case electrical and life time characteristics │
└───────────────────────────────────────────────┘
                      ⇩
┌───────────────────────────────────────────────┐
│ DRC rules tightened pessimistically (device W/L; wire W) │
└───────────────────────────────────────────────┘
                      ⇩
┌───────────────────────────────────────────────┐
│ Scaling gains reduced or stopped unnecessarily early │
└───────────────────────────────────────────────┘
```

**Fig.3**

```
┌─────────────────────┐   ┌─────────────────────┐
│ Workload dependent  │   │ Workload dependent  │
│ device impact       │   │ wire impact         │
└─────────────────────┘   └─────────────────────┘
           ⇩                         ⇩
┌───────────────────────────────────────────────┐
│ Run-time subtask scheduler (on-line control)   │
└───────────────────────────────────────────────┘
                      ⇩
┌───────────────────────────────────────────────┐
│ Real-case electrical and life time characteristics │
└───────────────────────────────────────────────┘
                      ⇩
┌───────────────────────────────────────────────┐
│ Scaling gains maximized, hence longest scaling │
└───────────────────────────────────────────────┘
```

**Fig.4**

EP 3 035 254 A1

**Description**

**Field of the invention**

The present invention is generally related to the field of methods for operating an electronic processor based system and to provide a guaranteed operation under a performance constraint or other system parametric constraint.

**Background of the invention**

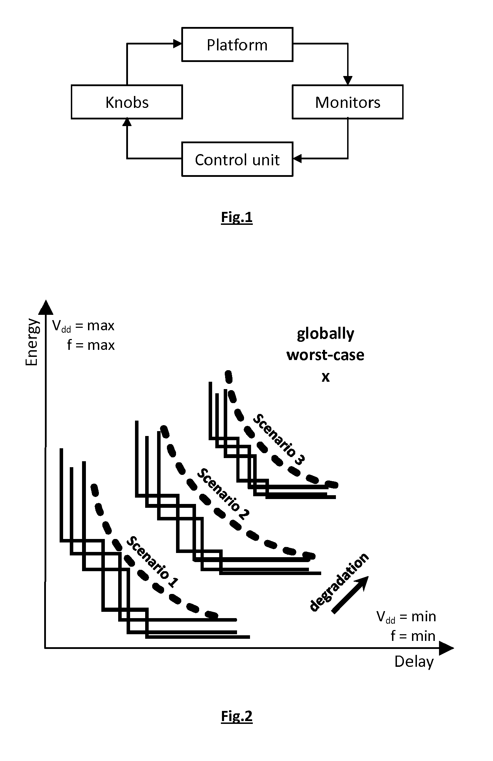

Modern digital electronic systems equipped with degrees of freedom (knobs) allow different operating points with respect to energy consumption and delay. At the same time, they comprise many monitors with which energy consumption and/or delay of a digital system can be measured (run-time monitors, sometimes also referred to as on-line monitors). Fig.1 shows the control loop assumed in place in an arbitrary platform. The knobs and monitors operate in a closed loop. Monitors provide information about the state of the system (e.g. achieved delay in picoseconds or cycle count) and knobs allow steering the platform to working points with different trade-offs in the delay-energy space (e.g. dynamic voltage and frequency scaling, DVFS, allows steering the supply voltage and frequency knobs). The control unit is responsible for manipulating knob positions, based on monitor information with the goal of achieving performance variability mitigation under hard deadlines being imposed on the system. Depending on the given application characteristics, the control policy may be based either on system scenarios or dynamic scenarios.

In the literature system scenarios can be used to exploit the presence of application dynamism. A significant amount of work exists on identifying such scenarios at design time. When a control policy is applied based on system scenarios, a priori knowledge is required of platform degradation/variability patterns, so that the entire range of later on-line execution is covered. Each execution instance of such a pattern corresponds to one run-time situation (RTS). Run-time situations can be combined into system or dynamic scenarios, based on their similarity in terms of observed cost metrics. Design-time or run-time (learning-based) exploration of knob settings leads to a set of system operating points belonging to a front of Pareto Optimality, each point coding for a different knob configuration.

It is very important to know how the delay-energy trade-off is affected by time-zero variability and time-dependent variability. Time-zero variability is caused by the shrinking of the lateral dimensions of the devices to atomic levels, causing variations among the devices during fabrication. It is also commonly referred to as process variability. Time-dependent variability refers to the variability of the device parameters after fabrication caused by the activation of semiconductor degradation phenomena within devices and wires that experience stress during at least part of their life time. This stress results in an additional statistical distribution of the device parameters. A similar transient and time-dependent parametric fluctuation can also result from other mechanisms, apart from degradation. In particular, soft errors due to particles and supply or ground noise impact can also lead to temporary suboptimal parameter situations. The overall variability of such devices is caused by a combination of time-zero and time-dependent variability. This knowledge can be obtained by a thorough reliability analysis/modelling session at design time. However, the number of RTSs is huge, hence, identifying and storing all of them causes the system cost at design time to explode. Similarly, trying to move all or most of this RTS analysis effort to run-time will explode the run-time system overhead. Instead, the RTSs are clustered into scenarios based on their distance to each other in the space of run-time degradation for the cost objectives. Each scenario is represented by a worst case RTS per scenario instead of by a globally worst-case RTS. This results in a reduced overhead in comparison to prior art solutions. Fig.2 shows a qualitative example of such a representation. Note that also the globally worst-case RTS is indicated. Each dashed curved line in Fig.2 shows a grouping of many "close" RTSs into a scenario.

System scenarios can be combined into the control loop of Fig.1 by encoding them in the control unit component. As monitors provide information about the state of the platform, the control unit can identify the active scenario based on the predefined design time information of the scenario boundaries. Thus, it can make an educated configuration of the platform knobs and bring the platform to a state where performance variability is mitigated, while platform deadlines are respected. Failure to achieve either of these two objectives leads the control unit to select the globally worst-case scenario (backup), which results in correct execution but without any cost savings compared to the worst-case reference techniques known from the prior art. This backup is rarely selected though, so on average it contributes very little to the overall cost. Hence, the most frequent scenarios contribute to a potentially significant overall cost saving compared to the fully worst-case scenario. In the fully catastrophic case, a denial should be issued by the platform prior to the task being launched, so that the guaranteed execution is never violated.

The term parametric violation implies that a guaranteed system specification is not met. More specifically, parametric reliability violations refer to the fluctuation of operation parameters of a digital system which can be quantified using a fidelity metric, such as delay, power consumption, signal-to-noise ratio (SNR), etc. It is possible to observe parametric reliability violations at various abstraction levels. Parametric violations can be due to any time- and workload-dependent degradation of the system operation parameters. In particular they can be due to the degradation of the physical system platform, either in the devices (e.g. BTI, RTN, HCI, high-k TDDB) or wires (e.g. electro-migration or low-k TDDB). Nowadays, transistors implemented in process technology are commonly referred to as devices. However, they can also be the result of voltage noise on the supply or ground lines of the circuit, or temperature dependent fluctuations of the operation point due to thermal gradients across the digital system.

A functional fault leads to corruption of some binary data. More precisely, a functional reliability fault is the deviation from the expected system behaviour in terms of service delivery or binary correctness. Examples include silent data corruptions, or in the worst case, a total denial of service. Bit level corruption of computer data has been a major reliability concern in microprocessor design. Aging, for example, can cause parametric variations in circuit timing, which, in turn, may lead to data corruption. Also radiation may cause bit flips either in the logic or the memory. Also, certain industry trends, such as near-threshold computing and device downscaling, lead to bit-level corruption through device variability. Such bit flips can be corrected with appropriate circuitry.

Processor designers have devised techniques that mitigate bit-level errors. Error Correcting Codes (ECC) have been used to correct corrupt data in memories and defective memory blocks may be deactivated. In the logic, techniques such as shadow latches can capture timing violations, which may lead to bit-level corruption. Alternatively, residue codes may be used to capture erroneous operations in the system logic.

An overview is now given of existing and emerging design solutions for reliability mitigation in unreliable technologies. Traditionally, bit errors resulting e.g. from single-event single-bit upset (SSU) can be alleviated at different abstraction layers, based on available correction and detection techniques. In conventional approaches parametric violations are typically not corrected as such, but they lead in the end to a functional error, which is next detected and corrected by functional error mitigation approached as described below.

Hardware (HW) Based Error Mitigation

HW-based redundancies for reliability enhancement have been widely studied in the prior art. One example is the error correction circuitry (ECC) which is used for different memory levels as ECCs provide single-bit correction with feasible area, energy and timing overhead. For example, it has been shown that single-error-correction double-error-detection (SECDED) ECC adds 15% area overhead when used to protect L1 SRAMs. However, as technology scales, single-event multi-bit upset (SMU) rate increases significantly, debilitating the SECDED ECC mitigation capability. Although multi-bit ECC circuits can be used to mitigate SMU-based errors, multi-bit ECC circuitry demands significant area, energy and timing overheads. These overheads can be feasible in high-capacity, low-level (e.g. L2, L3) memories, but they are, from an industrial perspective, unacceptable for low capacity and fast embedded SRAMs (e.g. 64KB). For example, the area overhead of an 8-bit ECC integrated to a 64KB L1 SRAM is reported to be more than 80%.

Other HW-based research directions use interconnected modules to mitigate hard failures through fined-grained redundancy. For example, StageNet (Gupta et al., "StageNetSlice : A Reconfigurable Microarchitecture Building Block for Resilient CMP Systems", CASES'08, 2008) is a highly reconfigurable multicore architecture designed as a network of pipeline stages, rather than isolated cores. Using this connectivity, the instruction flow can be routed away from a faulty pipeline stage and use another healthy counterpart to ensure reliability. However, this approach comes with a rather large area overhead that reaches more than 20%. Energy-overhead minimization in fault-tolerant hardware redundant systems has been proposed, where primary and spare processing units are used in parallel. The proposed technique uses dynamic voltage scaling (DVS) and dynamic power management (DPM) to achieve energy minimization. However, this solution is too costly for power and area-sensitive systems since a full duplicate of the processing unit is required for this technique.

To protect L1 and L2 cache architectures, a low cost hardware mechanism has been proposed that provides multi-bit error protection. This mechanism enhances the write-back parity-protected cache by adding two registers used to store information on data written in caches, such that if an error occurs in one of the written lines, a recovery could be performed. While this approach is effective at low error rates, it is limited by the ability to correct a simultaneous number of injected errors. Moreover, this approach corrects any detected error, which implies significant energy consumption at high error rates, regardless if the written data is reused or not. In "Multi-bit error tolerant caches using two-dimensional error coding" (Kim et al, Proc. Int'l Symp. Microarchitecture (Micro-40), 2007, pp.197-209) the authors propose a cache memory error protection by using 2D code schemes. This proposal places two error detection circuitry units, namely horizontal and vertical units, which are used together for a guaranteed error correction of any faulty cache line. However, this work adds area and energy overheads that would not be acceptable for the targeted low-power SoCs. The main reason behind the significant energy overhead is in the unnecessary correction of all bit flip occurrences in the target memories. This may not be required due to data error masking.

Software (SW)-Based Error Mitigation

Error mitigation at the SW layer has brought a lot of attention. SW-based mitigation can be split into techniques that apply checkpoints and rollback-based recovery (backward error correction) or resource redundancy (forward error correction). Several backward error or forward error corrections schemes have shown their efficiency in recovering from errors. For example the paper *"DeCoR: A Delayed Commit and Rollback mechanism for handling inductive noise in processor"* (Gupta et al., IEEE 14th Int'l Symp. High Performance Computer Architecture, pp.381-392, 2008) proposes a delayed commit and rollback mechanism to overcome soft errors resulted from different sources such as noise margin violations and voltage emergency occurrence. The authors divide stored data in the processor pipeline to two different states, noise-speculative and noise-verified states. Moreover, the authors rely their solution on a violation detector that has a time lag (D) to detect a margin violation. If a data value is in noise-speculative state for a time period D and no violation is detected, it is considered as noise-verified (correct data). Otherwise, it is considered faulty and a rollback to the last verified checkpoint is performed, with flushing all noise-speculative states. Although this approach seems interesting, it has a performance loss that reaches 18%, so it is not suitable for time-critical embedded systems. In general, these techniques either incur significant time overhead or degrade the output signal by a considerable value. Thus, if these techniques are used as-is with the expected growth in fault rate, the time overhead will quickly increase to unacceptable values.

Other approaches exploit data-redundancy, such as redundancy in networked embedded system design for reliability management. Lukasiewycz ("Exploiting data-redundancy in reliability-aware networked embedded system design", Proc. 7th IEEE/ACM Int'l Conf. Hardware/Software Codesign and System Synthesis, pp.229-238, 2009) identifies the data redundancy between different functions that run on a certain architecture. This identification is later used to optimize resource allocation, hence ameliorating the reliability. However, this approach does not mitigate any error occurrence. Temporal and spatial redundancy has been used to minimize soft error rates (SER) based on creating frequent checkpoints and performing a rollback in case of error occurrence. In the temporal redundancy approach, an instruction execution is duplicated in its latency-use slack, which is the elapsed number of cycles before the computed result from the instruction becomes the source operand of a subsequent instruction. In the spatial redundancy approach, the instruction is duplicated in a nearby idle core. These techniques have varying latency overheads (8%-25%), so it is again not suited for time-critical systems.

HW/SW Reliability Management

In addition to strictly HW and SW mitigation mechanisms, several works have exploited the benefits of developing integrated HW/SW reliability management mechanisms. Cross-layer reliable systems design combines the error resiliency at different layers of abstraction, where information on reliability from the hardware level is propagated to the application level to reduce cost. These mechanisms mainly target multi-objective goals such as minimizing energy while meeting certain reliability constraints. However, all existing research directions exploit the use of mitigation techniques at the system architecture abstraction layer or higher, such as reliability-aware voltage and frequency scaling and task management or instruction-level redundancy, an error-detecting unit triggering a hardware ECC unit or the use of checkpoints with a partially protected memory segment (see EP2660722). They require too much application or middleware intervention and cannot be used in a black-box or grey-box approach.

Moreover, cross-layer designs can be too fine grained (micro-operation level) or too coarse grained (task level) with respect to the inter-layer communication. Such abstract granularity, if not carefully and globally decided, leads to one optimized parameter (e.g. time) at the expense of another sub-optimal parameter (e.g. energy). A well-balanced multi-parameterized design is crucial to an industrial designer. Thus, the aforementioned work overlooks at least one important parameter and can therefore not be sufficient in cost-effective time-critical embedded systems.

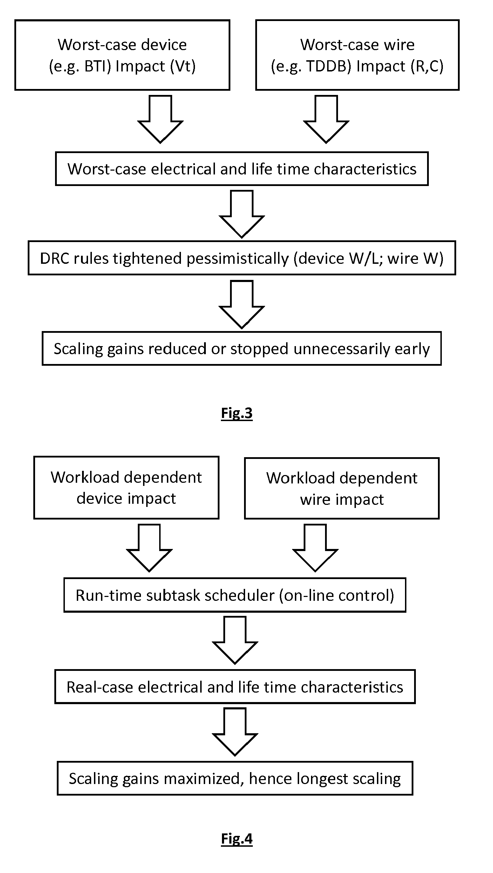

Prior art schemes still try to provide hard guarantees on technology vs. chip fabrication but tolerances are increasing and no longer fully 100% (see SRAM e.g.). Guard-banding leads to over-design and hence to earlier stopping of the continued technology scaling roadmap, at least when scaling gains are no longer sufficient to motivate the drastically increasing investments and non-recurring engineering (NRE) costs (see Fig.3). System modules, such as core processor, memory organization, etc., now guarantee a certain number of field returns due to functional and parametric violations by applying the worst-case design paradigm for strict constraints (e.g. real-time, battery life time, temperature limits). Cost constraints are especially important for the consumer market. Moreover, the above paradigm is breaking due to the overhead of worst-case design. An even stronger threat is that deep-deep submicron technologies cannot even give strictly hard worst-case bound any longer (due to the presence of outliers).

Even though error mitigation techniques guarantee functional correctness, they can incur a variety of performance overheads in the processor. For example, tasks may require a greater number of clock cycles to complete, i.e. a temporal overhead. Voltage (Vdd) and frequency (f) tuning pays an energy cost to improve yield.

The overhead of defective memory block deactivation has been quantified with the Performance Vulnerability Factor (see 'The Performance Vulnerability of Architectural and Non-architectural Arrays to Permanent Faults', Hardy, D. et al., IEEE/ACMMICRO, Dec 2012, pp. 48-59). Error correction rollbacks have been compensated with static frequency scaling. In US2010/191349 dependable performance is guaranteed by frequently solving an optimization problem for run time Vdd and f mode scheduling.

As processor-wide error rates intensify, it is relevant to explore techniques that maintain performance dependability, in view of such overheads. This trend of time dependent performance variability, i.e. the fluctuation of a system's performance and quality cost, as a result of intense workload and, hence, time-dependent degradation is drawing more and more attention.

The domain of mixed criticality also deals with dependable performance. Some approaches use design time estimations of worst case response time, while others use the concept of "virtual deadlines" to decide on the schedulability of high criticality tasks.

It appears that error mitigation is scarcely put into a dependable performance perspective. Attempts to quantify and statically reclaim such temporal overheads exist, however no adaptive and run time solutions have been proposed. Mode scheduling and mixed criticality provide insight into dependable performance, however they propose complicated or purely design time techniques.

Hence, there is a need for adaptive solutions wherein these drawbacks are avoided or overcome.

## Summary of the invention

It is an object of embodiments of the present invention to provide for a solution that leads to a guaranteed system operation under a performance constraint or other system parametric constraint, despite the presence of time-zero or time-dependent variability in the digital platform.

The above objective is accomplished by the solution according to the present invention.

In a first aspect the invention relates to a method of managing the operation of a digital synchronous electronic system with a guaranteed lifetime, using digital processing means, whereby task information is exploited of a dynamic application running on said electronic system. The task information is derived from a system model comprising both

- deterministic upper bound curves of one or more guaranteed objectives in a multi-dimensional design space as a function of time evolution of tasks of the application, said upperbound curves being parameterized in terms of application workload and environmental conditions, and
- probabilistic or analytical estimates of one or more cost functions of the time evolution of the tasks of the application, said estimates being parameterized in terms of application workload and environmental conditions.

The method comprises the steps of :

- monitoring at run time the electronic system, while said electronic system executes in a current system working mode a set of tasks of the application currently running on the electronic system,
- detecting a violation in at least one parameter of the electronic system, said violation affecting the one or more guaranteed objectives and/or the one or more cost functions,
- selecting at least one condition for revising the current system working mode of the electronic system. If the at least one condition is met, a revised system working mode is selected for continued execution of the set of application tasks while remaining within limits imposed by the upper bound curves, while reducing a parametric error rate as a function of the parameters. The revised system working mode is thereby selected among a set of possible system working modes based on a prediction of future application workload and/or environmental conditions.

The proposed solution indeed allows for achieving the above-mentioned goal. The method makes use of a system model comprising both deterministic upper bound curves of one or more guaranteed objectives and probabilistic or analytical estimates of at least one cost functions of the evolution over time of the tasks of the dynamic application running on the system. Both the upper bound curves and the estimates are parameterized. The parameters take into account the application workload and environmental conditions. The electronic system is monitored at run-time, while the system is in some initial working mode. The detection of a violation in at least one parameter of the electronic system, forms a trigger for executing the method. The occurrence of the violation influences the at least one guaranteed objectives and/or the at least one cost functions. Next, at least one condition for revising the working mode is selected based on the (estimated) at least one cost function. The proposed approach is based on a constraint optimization where the constraints are derived from the upper bound curves. If the condition for revising is met, a revised system working mode is selected for continued execution of the application tasks until a next trigger arrives.

In a preferred embodiment selecting the revised system working mode is performed while also optimizing at least one of the cost functions based on the probabilistic or analytical estimates of the at least one cost function.

In another embodiment each task of the application has a look-up table for said guaranteed objectives and most tasks have a look-up table for said cost functions, whereby entries in the look-up table define a set of possible task working modes for executing said task of the application, said task working modes defining the mapping (allocation and scheduling) of the system subtasks to the digital platform components, and whereby selecting the at least one condition for revising is based on the entries in the look-up tables.

At least one of the look-up tables preferably contains an extreme task working mode which can save additional cost but which can only temporarily be selected at run time depending on timing, thermal and/or reliability constraints of the electronic system using predefined models at design time. As it is an intrinsically unsafe working mode, the selection of the extreme working mode will take into account the current situation and a prediction (parametric upper bound based) of the future expected workload. Only when that situation and the predicted future are still meeting the reliability constraints and as long as overall cost saving is achieved, the extreme mode will be maintained.

In one embodiment the revised system working mode is selected based on the prediction of future application workload and/or environmental conditions after checking whether the one or more guaranteed objectives are met and if so, selecting another point in the at least one look-up table for at least the guaranteed objectives of a task of the application, and possibly also for the at least one cost function, such that a value on a guaranteed objective axis is decreased or increased within the constraints based on their potential to optimize the cost.

In another embodiment, for at least one task of the application a future point in time is determined where slack is available to improve at least one guaranteed objective and where moving said slack to the current point in time improves one or more cost functions. Preferably the move is selected which improves these cost functions the most.

Reducing the parametric error rate is preferably performed with a feedback controller. However, alternative control mechanisms can be applied as well, like e.g. state space control or neural network based.

In another embodiment the method additionally comprises a final step of mitigating a remaining 0/1 bit fault in a memory by monitoring a parity bit detection and applying a roll-back scheme to correct said bit fault. In this way also functional errors can be dealt with. Moreover, the parametric violation mitigation on its own cannot provide full guarantees but it substantially reduces the probability of the parametric violations occurring. The rare violations that are not captured and mitigated, propagate to the synchronous registers of the system where a synchronisation happens. They may lead to functional errors there. These rare functional errors are then safely and fully mitigated with a negligible cost overhead by the functional mitigation scheme of EP2660722. In one embodiment the detected violation is due to cycle overhead.

In another embodiment the method comprises a step of performing at run-time mitigation of an error caused by process variations at fabrication time. Advantageously, the process variations are accounted for by adapting a one-hot encoded address in a memory.

In another embodiment a processor-level proportional-integral-derivative (PID) controller computes a rate divergence slack in order to optimize the cost functions within the guaranteed constraints. The rate divergence slack indicates the amount of time slack that the current working point is away from the parametric time constraint. The rate divergence slack is affected by cycle overhead.

In a preferred embodiment the method further comprises a temporary extreme acceleration to optimizing said at least one cost function and to ease meeting said at least one guaranteed objective.

The invention also relates to a program, executable on a programmable device, containing instructions which, when executed, perform the method as in any of the previous claims.

In another aspect the invention relates to a digital synchronous electronic system having a guaranteed lifetime and adapted for running a dynamic application, whereby task information is exploited of the application derived from a system model. The system model comprises both deterministic upper bound curves of one or more guaranteed objectives in a multi-dimensional space as a function of time evolution of tasks of the application, said upperbound curves being parametrizable in terms of the application workload and environmental conditions, and probabilistic or analytical estimates of one or more cost functions of the time evolution of the tasks of the application, said estimates being parametrizable in terms of the application workload and environmental conditions.

The electronic system comprises

- digital processing means,
- monitoring means for run-time monitoring of the electronic system, while the electronic system executes in a current system working mode a set of tasks of the application currently running on the electronic system,
- detection means for detecting a violation in the electronic system, said violation affecting the one or more guaranteed objectives and/or the one or more cost functions,
- a selection module for selecting one condition for revising the current working mode of the electronic system and for selecting, if the at least one condition is met, a revised system working mode for continued execution of the set of application tasks while remaining within limits imposed by the upper bound curves, while reducing a parametric error rate as a function of the parameters, whereby the revised system working mode is selected among a set of possible system working modes based on a prediction of future application workload and/or environmental conditions.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a control loop in a general system scheme.
Fig.2 illustrates an example of run-time situations clustered in scenarios along with a globally worst case run-time scenario.
Fig.3 illustrates the typical approach adopted in prior art schemes.
Fig.4 illustrates the general outline of the approach in the present invention.
Fig.5 illustrates an overall approach for the run-time stage.
Fig.6 illustrates a parametric reliability degradation vs time model for the devices and the wires.
Fig.7 illustrates the overall flow of parametric and functional mitigation at run-time.
Fig.8 illustrates in a qualitative way the performance of the proposed proactive approach compared to prior art solutions.
Fig.9 illustrates a proposed intra-cycle closed loop control scheme for guaranteeing proper timing behaviour of combinational parts of the digital system.
Fig.10 illustrates a proposed processor-level control scheme for mitigating the cycle overhead that may intervene with the execution of a certain task, for instance due to the correction of functional faults detected during processor operation.
Fig.11 illustrates a model for the cycle noise.
Fig.12 illustrates the step response of the proposed processor-level PID scheme.
Fig.13 illustrates a setting time exploration for the proposed processor-level PID scheme.
Fig.14 illustrates the mitigation of time-dependent performance variability at the processor level.
Fig.15 illustrates a dynamic scenario mitigation scheme.
Fig.16 illustrates the 'gas pedal' concept with excellent timing performance, but high energy consumption.
Fig.17 illustrates in a qualitative way the benefits of dynamic scenario mitigation of performance variability.
Fig.18 illustrates the workload variability exploited to (re)create slack with respect to the global system deadline.
Fig.19 illustrates the integration of time-zero process variation.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Techniques for mitigating the effects of reliability violations, either parametric or functional in nature, can be categorized in many different classes, taking into account e.g. whether they are intended for run-time mitigation or mitigation during testing, whether they are reactive in nature (i.e. based on "currently known history" and certain aspects of near future evolution) or proactive (accounting for and exploiting the expected but partly unknown future workload evolution) etc.

The mitigation technique according to this invention falls under the class of hybrid parametric mitigation techniques that have run-time as well as design-time capabilities. More precisely, the present invention relates to a proactive post-fabrication hybrid design-time/run-time mitigation technique against parametric system failures due to circuit- and processor-level variability. In addition, the proposed parametric mitigation technique can be used complementary to a functional mitigation technique, in order to obtain a full and safe guarantee of the mitigation of all parametric violations.

The present invention capitalizes on the observation that it is feasible to restore the mission guarantees needed for the demanding electronic systems of today when also design-level mitigation approaches are incorporated, which exploit the workload-dependent nature of the unreliable devices (see Fig.4). In contrast to the existing cross-layer solutions, the proposed mitigation approach achieves this within the boundary of a platform module (e.g. core processors, memory organization, etc.). This allows employing a so called black-box or at least grey-box approach towards the application. Otherwise the interface between platform modules and application would have to be fully broken down, which is too disruptive and economically unaffordable.

Mission guarantees can be defined as follows : whatever can be removed as violations and/or faults due to the fabrication should be compensated for and hence the producer will try to remove all of these faults in the design process. Violations and/or faults due to "force of nature" are however excluded. This allows checking prior to any "mission instance" whether the platform hardware and software are in a proper state to function correctly until the end of the mission. If any doubt on "remaining margins" is present, the mission should be aborted upfront. However, when the execution then runs into a "force of nature" like someone destroying the platform physically, the guaranteed execution is not valid any longer. For example, mission guarantees can be associated with an airplane flight. If at the beginning, before the flight launch, there is doubt of the presence of "remaining margins", the flight mission will be aborted. Similarly, if the flight mission runs into a "force of nature" obstacle, the execution can no longer be guaranteed.

The electronic systems referred to in this description are digital synchronous systems with well-defined timing constraints related to deadline violations or quality of service. The systems have at least one type of knob (e.g. for dynamic voltage and frequency scaling, DVFS) and at least one type of monitor (e.g. a delay detector, current measurement circuit or a parity detector). The considered electronic systems comprise processor cores, data and instruction memory organization and a communication network with middleware on top of it. In addition, the electronic systems are considered to be a grey-box where the execution in the processor cores remains the same and where the activity pattern across the processor can be deterministically described. The proposed mitigation approach will be explained more in detail with respect to an application running on such an electronic system.

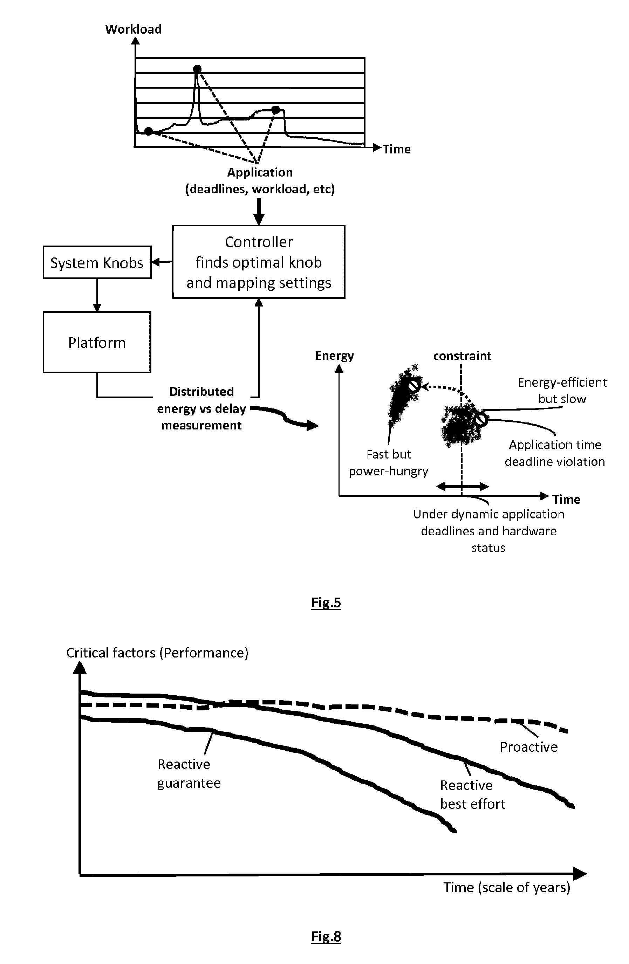

As described above, the proposed hybrid mitigation technique employs design-time and run-time techniques for ensuring parametric reliability. In the design-time stage a parameterized workload-dependent reliability vs aging model is developed for the electronic system at hand. In the run-time stage the workload-dependent aging model is infrequently calibrated. The electronic system contains a run-time controller for steering the appropriate cost-effective "knobs" available in the electronic system. The controller takes a decision on setting one or more knobs based on carefully selected monitors, which provide information about the state of the system. Based on the system state, the controller adjusts at least one of the knobs if needed, thus steering the system to operate at another working point characterized with a different trade-off in the delay-energy space (e.g. another DVFS point). Changing these knobs results in another setting of the way the application is mapped to the digital platform, so they can be seen as "mapping settings" (see Fig 5).

At the run-time phase, the time-zero and/or time-dependent process variation in the devices and wires creates regions of delay-energy design points. The uncertainty of these regions may lead to parametric violations in the platform modules during the actual use of the electronic system, which is unacceptable in the considered target domain. So at run-time, whenever a timing error is detected, the controller moves the working point of the platform module(s) wherein an error was detected, to another setting so that the system-level requirements are met again. The overall approach for the run-time stage along the lines described above is illustrated in Fig.5.

To meet these requirements, at least three tasks have to be dealt with in the overall variability mitigation approach :

- at design-time a workload-dependent aging model must be created at the processor platform level, based on available measurements of test structures on early fabrication shuttles for emerging technologies (e.g. 14-7 nm),
- at design-time an overall mitigation approach has to be explored for guaranteeing that parametric mission requirements are met,
- at run-time variability mitigation must be performed with negligible energy and cost overhead while meeting all parametric constraints (not just best effort).

The workload-dependent cost vs time model can be developed based on the method disclosed in US7831951, which exploits a Pareto-based task concurrency optimization for designing a digital system. The method uses a system level description of the functionality and timing of the digital system. A task concurrency optimization is performed on said system level description, thereby obtaining a task concurrency optimized system-level description including a Pareto-like task optimization information. The digital system is then designed based on said task concurrency optimized system-level description.

The parametric reliability degradation vs time model for the devices and the wires (Fig.6) can be based on workload-dependent models as the one of EP2509011 which is in particular intended for BTI (Bias Temperature Instability) degradation. Also other trap-based aging mechanisms like RTN (Random Telegraph Noise) and HCI (Hot Carrier Injection) can be modelled in similar ways as in EP2509011, because it is based on transitions between excitation and relaxation states of traps. For other transient violations affecting the parametric reliability, like soft errors and supply noise variation, similar models need to be developed which can serve as input to the techniques addressed in this invention.

Such a reliability vs time model for the device and the wires is developed for a selected technology node. The technology node may range from older technologies where the violations especially occur in the presence of reduced voltages (like near threshold computing/NTC in sensor networks) which are too small to maintain guaranteed noise margins (e.g. in memories or registers) to more advanced technologies in the deeply scaled CMOS or even beyond CMOS regimes, where violations will occur potentially very frequently also in nominal device operating conditions. Such a model can be created for different types of electronic systems, e.g. a platform for sensor applications or mobile or server applications.

In the run-time phase, first parametric mitigation at circuit level is performed. To obtain a full guarantee under all conditions, the parametric mitigation at circuit level should be followed by functional mitigation at the synchronisation boundaries in the system (registers in particular). This has already been described above. However, if for example in EP2660722 the rate of corrected functional errors intensifies, the associated cycle overhead cannot necessarily be hidden any longer. So, that would lead to system failures again. To prevent this, the cycle overhead can be absorbed with parametric mitigation at the processor level. For the purpose of detecting parametric violations at the circuit level, timing error monitors are employed which operate within the boundaries of a single clock cycle. For the purpose of detecting intense error correction related cycle overheads, cycle counters for detected recoverable errors are employed.

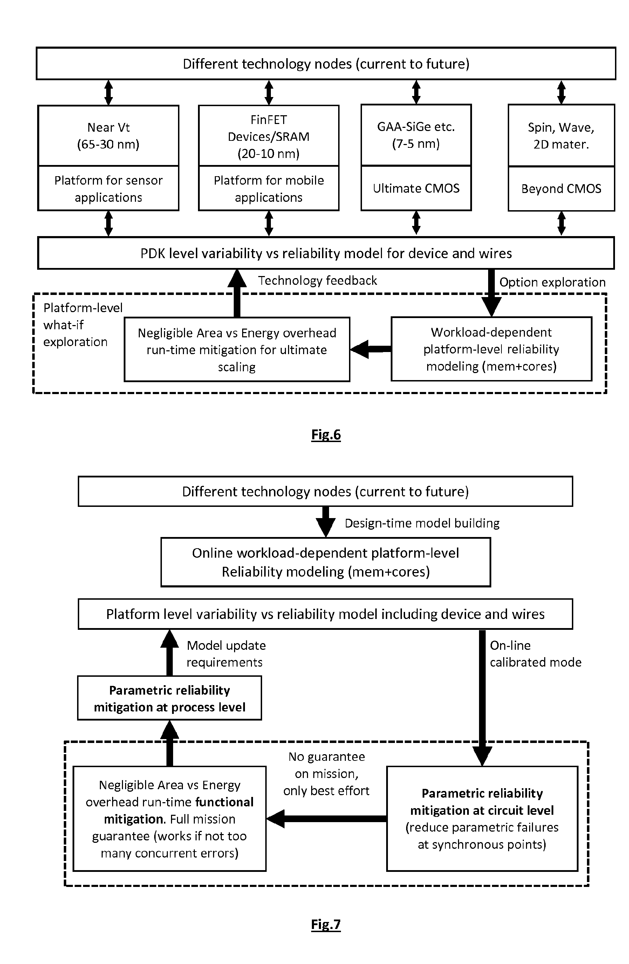

A proactive approach is proposed that exploits the workload-dependent nature of the reliability mechanisms at run-time, both for parametric mitigation at circuit and processor level. In this way a significant reduction of cost and energy can be achieved. In particular, in contrast to the prior art approaches of Fig.3, which are basically reactive in nature, the degradation of critical factors (such as performance) can be slowed down. Even when compared to a reactive best effort approach, which sacrifices strict guarantees in favour of a better performance, the proposed proactive approach can still outperform the results on the critical factors after some time (see Fig.7). Initially, the proposed proactive approach exhibits a small loss in performance due to the less aggressive loading of the devices and/or wires. However, at the end of the mission, a large performance gain is achieved due to the proactive relaxation of the workload-dependent aging.

Additional HW-IP wrappers can be put around the cores or memories to modify the data and address streams without imposing changes on the internal operation of the processor cores and memories. Also additional SW-IP wrappers can be integrated in the execution binary without having to recompile the application software executing on the platform, resulting in a grey-box approach. In particular, this means that the run-time manager functionality which is proposed above is coded in hardware logic (with logic synthesis) or in firmware (with a compiler to produce assembly code for a small embedded microcontroller. Both the hardware logic and the microcontroller would have to be embedded in the boundary of the memory or core component in the hierarchy of the digital platform.

In practice, care should be taken of both strict parametric and functional requirements that need to be guaranteed (see Fig.8). For the functional errors a cost efficient (in terms of area and energy) design-/run-time mitigation approach can be used as disclosed in EP2660722. That technique can mitigate all 0/1 bit faults in background and foreground memory based on parity bit detection monitors and a clever demand-driven roll-back scheme which corrects the error. The latter operates, when needed in a time-critical situation close to a strict timing constraint, at a higher frequency exploiting a special DVFS mode which does not increase the end time of the task. The boosted frequency for correcting errors can be seen as a strong acceleration of the normal core clock frequency (e.g. with a factor 2). An extreme clock frequency acceleration would not be safe (due to thermal run-away reasons) if it has to be sustained for a long period of time. However, as these critical error correction situations happen very rarely, system safety is ensured. In this way, all deadlines can be fully met. In the event that this functional error correction is intensifying and the cycle count of the processor cannot be maintained at the same level as the initial error-free operation, the processor level parametric mitigation technique discussed above can fully absorb the respective cycle timing overheads.

Despite the use of functional error mitigation, it is typically needed to significantly reduce the parametric error rate to a very low level (e.g. $10^{-8}$ or even $10^{-12}$) both to enable the above-mentioned acceleration and to keep the energy overhead low. For that purpose parametric error mitigation optimization at circuit level should be performed. Indeed, if one does not capture most of the timing errors, the values in the registers and memories potentially frequently become incorrect (in bursts) at the sampling instant (clock synchronisation). This has already been discussed previously. For this purpose, the use of an on-line timing margin detector is proposed to identify how close one is to the currently established clock cycle. In one embodiment of the invention a PID controller is used with a look-forward prediction mechanism to determine how to adjust this clock cycle to meet the imposed timing requirements with a near-guarantee. This PID controller will be presented more in detail below. The look-forward predictor has to be based on the expected near-future workload and the online workload-dependent reliability model (see top of Fig.8). Obtaining a full guarantee is not feasible with purely parametric approach at circuit level only, because it is based on tuned replicabased critical path monitors. However, any remaining (rare) timing violations will be recovered by the functional mitigation as discussed above. For example, if the predictor no longer performs well, a significant increase in functional errors is observed by the controller, which will, in turn, trigger a recalibration of the workload-dependent model. Recalibration of the model online allows tuning the parameters in the model to come closer to the aging status of the digital platform at that stage. Because of the better match with the real degradation, the parametric error rate can go down. This does not have to happen often, as the overall state of the materials in the platform is expected not to change that drastically over short periods. Only over longer epochs (hours or days) potential changes can be expected. The run-time manager checks e.g. every hour whether the monitored behaviour corresponds sufficiently well with the expected model. It waits till the platform has a non-active period where the application workload is absent or very low, with a lot of processing slack. If the correspondence is good enough, nothing has to happen; if not, then a recalibration process is started up which requires some computation overhead but it is very rare and at a moment when enough slack is available anyway. So no parametric constraints are violated and the energy cost remains negligible.

In order to perform parametric mitigation at the circuit level, the variation caused by time-zero and time-dependent variability must be detectable. Conventional monitors, such as tuneable replica circuits (TRCs) can provide error-detection sequentials (EDSs) when timing violations are detected in the TRC. Each TRC is tuned in such a way that it reports errors before the timing of the replicated pipeline is compromised by time-zero or time-dependent variability. This allows for delivering degradation metrics, e.g. for each combinational logic of a processor (e.g. a pipeline stage). In the present invention this metric is assumed to be observable and the notation *d[n]* is used, as it is provided in discrete time intervals.

A most preferred embodiment of a run-time manager as used in the approach according to the invention invokes a run-time PID controller to force the *d[n]* signal to converge to zero. The processor delivers the aggregate *d[n]* metric, derived by the various EDSs (i.e. monitors). A desired steady state value for *d[n]* is enforced on the PID controller. A simple subtraction derives the error *e[n],* namely the deviation of the processor from the aforementioned specification. The PID controller reacts to this error and configures the voltage and clock frequency accordingly. Special care should be taken, so that the controller overshoot does not cause functional violations within the combinational logic of the processor. Hence, the controller gains should be such that no delay overshoot is observable.

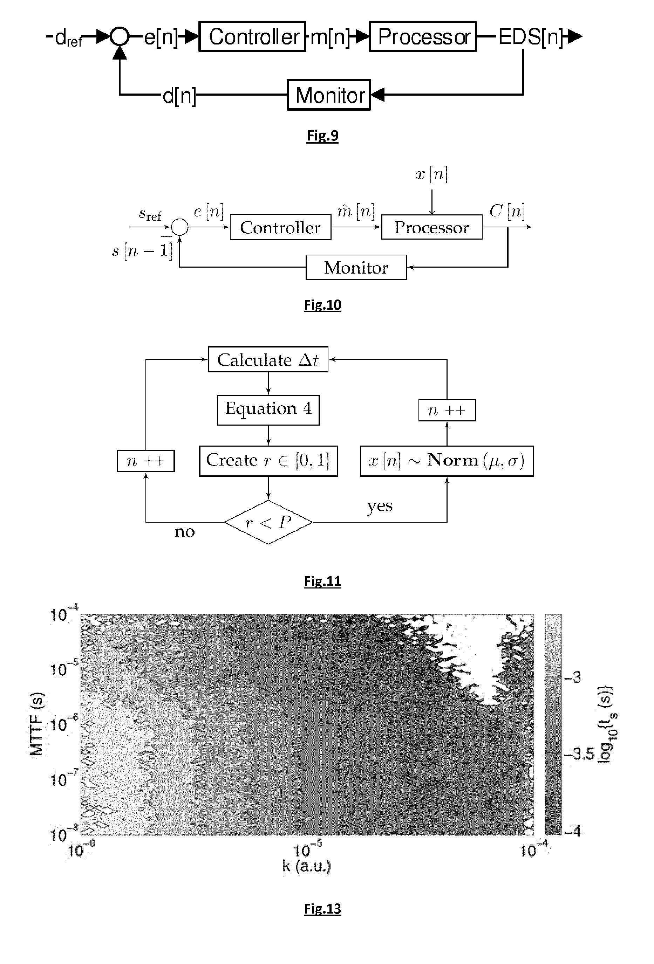

The steady state and transient behaviour of the PID controller is to be configured based on the proportional, integral and differential gains, as specified in a traditional PID control. The steady state error and transient behaviour can be properly configured during the testing phase of the processor. An overview of this control loop can be seen in Fig.9.

In the event of intense error corrections, the number of cycles used for the execution of any processor task is inflated with cycle noise invested in error mitigation. A discrete time run-time PID controller is proposed that can adjust the processor so that processor-level timing variability is avoided. The aforementioned adjustment can be implemented either through voltage and frequency configuration or by changing the resource utilization of the processor. Fig.10 provides an overview of the proposed control scheme, in the case where voltage/frequency is reconfigured to mitigate processor-level variability.

In case a timing error is detected, the error correction inflates the number of clock cycles required to complete portions of the instruction stream (corresponding to Thread Nodes (TNs)), executed by the processor. In order to guarantee dependable performance, the overhead of clock cycles due to the clock multiplier should be quantified and absorbed. This problem is formulated using the following definitions.

Definition 1: the Cycle budget N is the number of clock cycles cc of relevant computation assigned to each TN. This can be determined at design time or at run time according to Equation 1, based on a specification for the Cycles per Instruction CPI of the processor, the number of instructions L in a TN and a Performance Vulnerability Factor (PVF) tolerance $PVF_{limit}$.

$$N = (1 + PVF_{limit}) \times CPI \times L \qquad (1)$$

Definition 2: cycle noise x is the sum of clock cycles cc that are inevitably wasted by mechanisms like ECC, shadow latches etc. In general x comes across as the result of PVF degradation, as a result of error correction.

Definition 3: clock multiplier m is a positive real number by which the default clock frequency f is multiplied, reflecting possible DVFS configurations.

Definition 4: Deadline Vulnerability Factor DVF is the per unit difference between the real execution time ($T_{real}$ with an $m_{real}$ clock multiplier), including cycle noise x, and a reference execution time ($T_{ref}$ with a $m_{ref}$ clock multiplier), where no cycle noise occurs. This DVF be expressed as :

$$\mathrm{DVF} = 1 - \frac{T_{\mathrm{ref}}}{T_{\mathrm{real}}} = 1 - \frac{\frac{N}{m_{\mathrm{ref}} \times f}}{\frac{N+x}{m_{\mathrm{real}} \times f}} = 1 - \frac{m_{\mathrm{real}} N}{m_{\mathrm{ref}} (N + x)} \qquad (2)$$

Assume that a stream of TNs (n = 1, 2, ...) is executed by a processor. For each TN, a clock multiplier $m[n]$ can be selected. A cycle noise value $x[n]$ is also associated with each TN. A recursive formulation of DVF at the end of each TN is possible, however it requires many math operations to calculate. A recursive metric is needed that requires few math operations, thus enabling hardware integration of a DVF degradation monitor.

Definition 5: Rate Divergence Slack s expresses the divergence of the processor from a default clock budget ($N[n]$) that is assigned to a TN, assuming the default ($m_{ref}$) and current ($m[n]$) clock multipliers. It is given by the equation 3 below. This term is simply referred to as "slack" in the rest of this description.

$$s[n] = \frac{N[n]}{m_{\mathrm{ref}}} - \frac{N[n] + x[n]}{m[n]} + s[n-1] \qquad (3)$$

where n = 0, 1, 2, ... and $s[0] = m[0] = x[0] = 0$.

The rate at which cycle noise occurs and its peak amplitude can be defined as well. If a detected unrecoverable error occurs, the functional mitigation mechanisms intervene, by adding cycle noise $x$ to the overall TN cycle budget N. Hence, the rate of cycle noise is described by the due Mean Time to Failure *MTTF*. The probability P of cycle noise occurrence after wall-clock time $\Delta t$ is given by the equation

$$P = 1 - \exp \left\{ \frac{-\Delta t}{\mathrm{MTTF}} \right\} \qquad (4)$$

A random number r can be created and compared to P. If r < P cycle noise is assumed to be injected at that point of the execution and equal to x[n] ~ Norm(μ,σ), as shown in Fig.11. μ and σ depend on the PVF impact of error correction and reflect the amplitude of cycle noise.

The scheme of Fig.10 is proposed to absorb the effects of cycle noise. A slack specification is assumed, i.e. $s_{ref}$. The idea is to control the processor frequency so that the slack of the system (s[n]) converges to $s_{ref}$. The processor executes a stream of n = 1, 2, 3, ... thread nodes (TNs). It receives a clock multiplier m[n] from the proposed controller and applies the closest available setting *m[n]*. The monitor calculates the slack after the execution of the last TN, namely *s[n-1]* : for each TN, it counts the total number of clock cycles the TN actually required *C[n-1]* assuming state-of-the-art clock cycle measurement utilities. That way, cycle noise can be implicitly calculated as *x[n-1] = N[n-1]-C[n-1]* and *s[n-1]* can be derived by Equation 3. The proposed controller reacts to the error signal *e[n] = s[n-1] - $s_{ref}$* and provides a clock multiplier according to equation 5 below, which effectively represents the Proportional-Integral-Differential (PID) control principle.

$$\hat{m}[n] = \underbrace{e[n]k_p}_{\text{proportional}} + \underbrace{m_i[n-1] + e[n]k_i}_{\text{integral}} + \underbrace{(e[n] - e[n-1])k_d}_{\text{differential}} \tag{5}$$

Without any loss of generality, a single-core processor is assumed executing a stream of TNs with identical cycle budgets, N. The proposed scheme can be applied to any set of cores, each with its own DVFS control circuitry, controller and timing error monitors. All results presented herein come from simulations at TN granularity. Unless stated otherwise, the default simulation parameters are set according to Table 1 :

Table 1

| Parameter | Value | Description |
|---|---|---|
| $s_{ref}$ (cc) | 0 | Target run time slack |
| N | $10^4$ cc | Cycle budget per TN |
| $N_{total}$ | $10^7$ cc | Reference total cycle budget |
| Total $T_{ref}$ | 0.01 s | Reference total execution time |
| MTTF | $5 \times 10^{-4}$ s | Mean rate of cycle noise bursts |
| **Norm** (μ, σ) | ($10^3$ cc, $10^2$ cc) | Cycle noise amplitude statistics |
| **m** | {0.6, 0.7, ..., 1.5} | Available clock multipliers |
| m [0] | 1 (p.u.) | Default (initial) clock multiplier |
| f | 1 GHz | Reference clock frequency |
| k | $10^{-5}$ | Controller gain ($k_p = k_i = k_d$) |

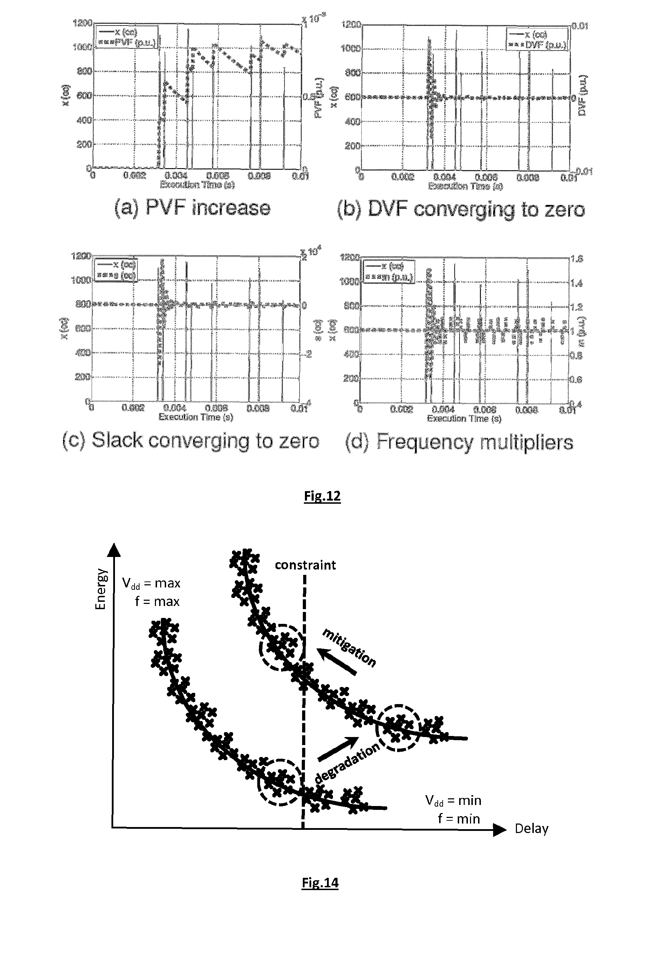

After the first third of the simulation, one starts injecting cycle noise at MTTF = 0.5 ms and x[n] ~ Norm ($10^3$, $10^2$), causing the PVF to increase (Fig.12a). The proposed controller configures the clock multiplier accordingly (Fig.12d), so that both DVF (Fig.12b) and slack (Fig.12c) converge to zero. As it also follows from Equations 2 and 3, both slack (s) and DVF will converge to zero when the $s_{ref}$ = 0 specification applies.

Assuming zero steady state value for DVF when $s_{ref}$ = 0 is enforced, the settling time for DVF ($t_s$) is evaluated as the stability metric of our control scheme. Without loss of generality, $k_p = k_i = k_d = k$ is assumed to simplify the stability exploration. In this set of simulations, the system is given a finite duration to settle, total $T_{ref}$ = 0.1 s. The results of Fig.13 indicate k values that lead to quick DVF convergence, while covering a wide MTTF range. The proposed scheme responds under 1 ms, which is very suitable when aiming at dependable performance under state-of-the-art latency specifications, such as in mobile broadband or multimedia.

A closed loop control scheme has been proposed above, wherein system performance information is being recorded by monitors and fed into a proactive on-line controller that adjusts in a demand-driven way the system knobs to mitigate the effects of time dependent performance variability. The decision making of the control algorithm may be based on design-time characterization of the workload-dependent impact of degradation and error correction on the system, in which case the concept of system scenarios is applied. In case the characterization of time dependent performance variability moves partly or entirely to the run time, the control principle utilizes entirely dynamic scenarios for time dependent performance variability.

Given the time dependent and heavily workload-dependent nature of performance variability, a series of cost objectives is identified that are altered as time dependent degradation of the system materializes. Excerpts of system operation are referred to as Run Time Situations (RTSs) and can be combined into System or Dynamic Scenarios, based on their similarity in terms of observed cost metrics. Design-time or on-line (learning-based) exploration of knob settings leads to a set of system operating points belonging to a front of Pareto Optimality, each point coding for a different knob configuration.

As time dependent performance variability materializes, for each scenario the curves indicating the optimal working point corresponding to a combination of energy and delay shift away from the original curves in the energy vs delay space. Thus, a separate RTS can be defined for the different workload-dependent degraded cases.

Regardless of how scenarios are created, it is important to align with the system constraints in place. As a result of time dependent performance variability, acceptable operating points may go beyond the constraint boundaries after the system has aged. Hence, the control algorithm is responsible for identifying the operating points that are still acceptable with respect to system constraints and finally choosing the optimal one. The concept is illustrated in Fig. 14.

The clustering of "degraded RTSs" into scenarios can be defined at design time, after an extensive, simulation-based, reliability analysis. This resembles the system scenario methodology. However, not only the application dynamism is exploited any longer. Instead, both the effects of application dynamism and workload-dependent reliability degradation are now incorporated. Moreover, also the way the system constraints have to be guaranteed changes disruptively in moving from application dynamism only to the new situation. Even when the application behaviour is static at some point the time-dependent platform degradation and trigger additional moves in the Pareto space still need to be monitored. However, in order to alleviate computational complexity from the design time, one can at least partly characterize and identify scenarios at run time, which resembles the dynamic scenario methodology.

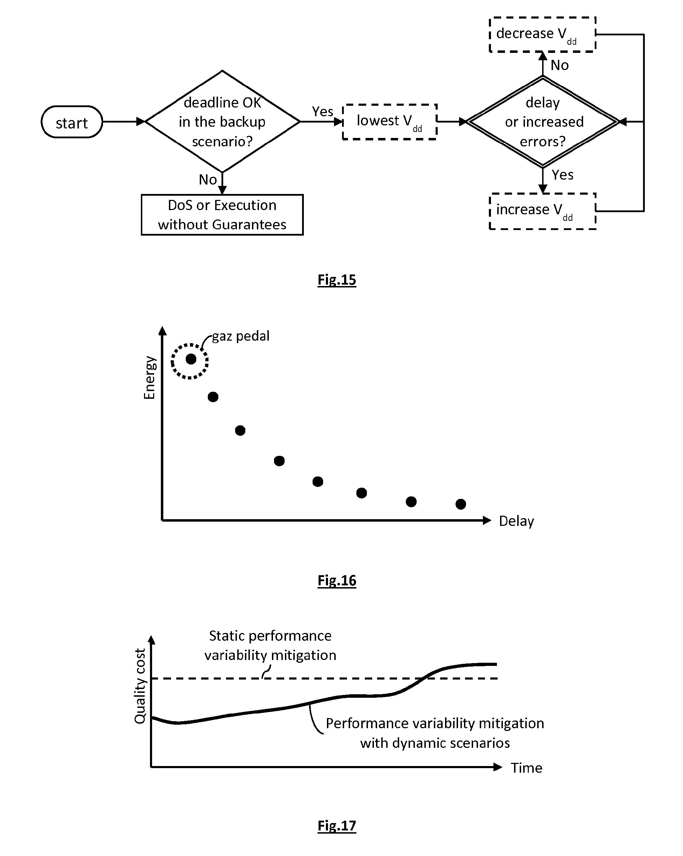

The case of dynamic scenarios is different from the system scenario case, in that the RTS clustering is not constant throughout the lifetime of the platform. Thus, there is no single scenario representation that is fed to the control unit. On the contrary, as time progresses, the platform measures itself and decides on the configuration that reduces the quality cost. Fig.15 shows a flowchart of the dynamic scenario mitigation scheme assuming Vdd as the only knob available to the system. Given that the assigned task is feasible within the requested deadline in the default (worst-case) configuration of the platform, the control unit initializes the $V_{dd}$ in the smallest allowable value. As errors or delay start to increase, the control unit signals the knobs to adjust accordingly, while progressively increasing the quality cost of the mitigation scheme (e.g. energy consumption or temperature, due to increased $V_{dd}$). The idea is that, contrary to prior art, where the knob setting is maintained without incorporating the predicted future workload, we adaptively tune the $V_{dd}$ of the system exploiting this future as effectively as possible, thus mitigating performance variability in a holistic cost-conscious way.

A very important concept for the dynamic scenario mitigation is that of the *gas pedal,* i.e. a temporary extreme acceleration, that further optimizes the cost and eases meeting the guaranteed objectives. Given the continuous presence of the backup scenario, it is sometimes important to urgently configure the platform to compensate for nearly catastrophic cases of performance variability. In order to do that, platform knobs need to be configured in the most pessimistic way, as the case of maximum $V_{dd}$ setting to maintain the highest clock frequency of the platform. Such a setting may guarantee system timing and functional correctness, but has negative effects on platform degradation (e.g. due to the creation of hot spots and thermal run-away). As a result, the gas pedal has to be used in a careful way. The gas pedal can be visualized in the Pareto front as a point that incurs excellent timing performance, but strongly increased energy consumption (see Fig.16). Engaging the gas pedal can temporarily alleviate extreme cases of platform degradation or variability but should not occur in a continuous way, in order to protect the platform's physical fabric.

The general motivation behind the proposed methodology is that, contrary to prior art, where a single knob setting is maintained throughout system lifetime, the $V_{dd}$ of the system is adaptively tuned, thus mitigating performance variability in a cost-conscious way (indicated qualitatively in Fig.17). The gas pedal is used to allow more safety initially than what is feasible in the system scenario case or in other state-of-the-art approaches. If needed, one can temporarily speed up beyond the conventional best-case speed. In that way one can take more risk and reduce the cost (e.g. energy) as long as the maximum delay penalty induced by the risk taking does not exceed the extra speed up available by the gas pedal. Only toward the end of the scenario period (see Fig.20), close to the absolute position of deadlines, one potentially has to spend more cost than the reference approaches, in order to speed up. But on average over the entire scenario period, there substantially is a cost saving.

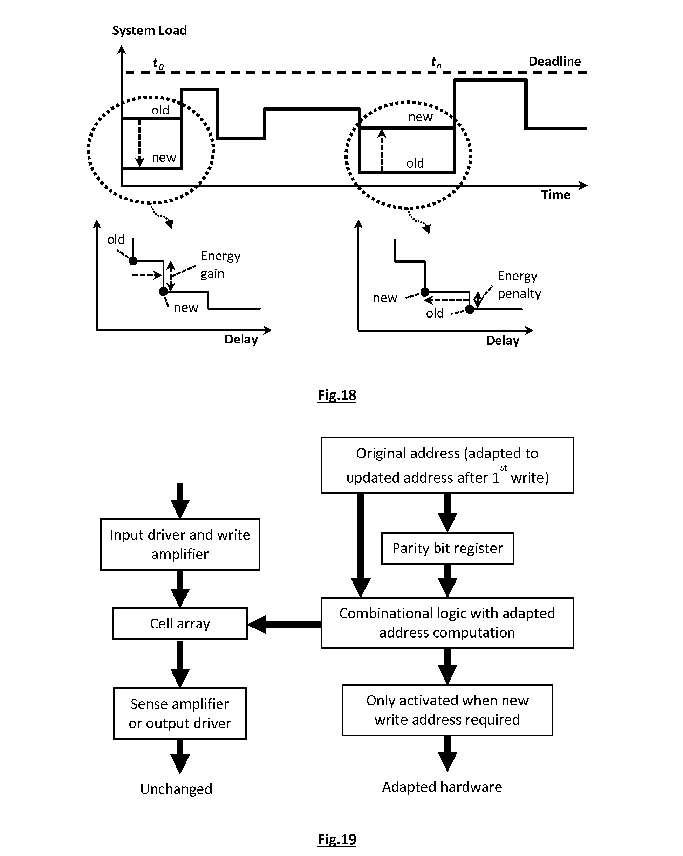

Given the safety net provided by the gas pedal, the slack associated with a digital system can be handled in a dynamic way. In a typical case, an embedded digital system needs to perform certain tasks within a specific deadline (see Fig.18). At different time instances the load of the system is different, assuming the variability of requests issued by the end user. Given an extensive profiling of the system, it is possible to predict with good confidence that the system load may be reduced a certain future time instance (e.g. $t_n$). Such information can be exploited at the present (e.g. $t_0$),

by reducing the quality cost of the platform (i.e. creating slack). This can be achieved, for instance, by reducing the $V_{dd}$ of the platform. For such configuration to incur energy savings for the system, it is important to know the Pareto space of possible knob configurations at any time instance. In the presented example, the Pareto space for each time instance is presented in the bottom of Fig.18. This shows that the creation of slack comes with significant energy benefits given that the gain at $t_0$ is clearly higher than the loss at $t_n$. When the $t_n$ instance arrives and the slack is consumed (by accelerating execution), the platform reconfiguration comes at a reduced cost, thus substantiating the energy benefits of the dynamic scenario control principle. At the extreme time instance, when the deadline might be threatened, one can utilize the gas pedal to respect the deadline and quickly fall back to typical Pareto points to avoid extreme degradation of the platform.

The difference between system scenarios and dynamic scenarios can be highlighted in a more detailed way also as follows. In the system case, scenarios are pre-existing in the control plane of the system. This means that a characterization of system performance has been performed at design time. This leads to a creation of RTSs, which, when clustered, lead to the pre-existing scenarios. In the system scenario case, scenarios may be parametrically coded in the control plane, so that a brief calibration is required during the setup of the system. In the dynamic case, scenarios are partially/fully absent at the time zero instance of the system. The mitigation control module is building scenarios at run time (i.e. identification of RTSs, clustering and calibration are partly performed on the fly in an adaptive way). This requires a "refreshing" of the scenario inventory of the system across instances of the system lifetime. In the case of Bias Temperature Instability (BTI) and Random Telegraph Noise (RTN), existing models already allow verification of this concept by inspecting the system lifetime over intervals of varying duration (from seconds to years).

To account for the impact of time-zero process variations at run-time, the invention presents a solution which is fully compatible with and seamlessly integratable in the overall reliability mitigation approach. A demand-driven approach is adopted where energy overhead is present only when an error occurs (see Fig.19). The latter can be detected by the same parity detection hardware (for the memories) as the monitors for the time-dependent faults. Whenever a time-zero error or another permanent error occurs in the memory array, the address to such locations is selected as the next position which is error-free. It is deterministically known what the new address is of each data, as the positions of the earlier detected errors are known and it is possible to deterministically compute the address offset to be added for each data that has to be retrieved or stored. So that address offset can be stored and added dynamically whenever a specific original location is requested for a read or a write. The application code is adapted to allow this dynamic updating.

An even more effective and application-agnostic way to account for time-zero process variations at run-time can involve the use of "1-hot encoding". In that case access to the hardware realisation of the memory units (to the periphery at least) is needed. The address can then be seen as two long pointers (row and column address are as long as the number of memory rows or columns) where only a single "1" is present on the active row or column and the other bits are kept at "0". Then, depending on the erroneous rows or columns (stored in a parity bit vector), the single "1" in the pointer is moved to the next available non-erroneous position. That can be efficiently achieved by simple adding the desired one-hot encoded address (having a single 1 position) to the parity bit vector, and by masking out any bits (to 0) that have not been toggled. For instance if 00110010 is the parity bit vector (blocks 3, 4 and 7 contain faults are not usable at this stage), then address 1 goes to 10000000+00110010 = 10000000 but address 3 goes to 00100000+00110010 = 00001000 because the 1 at position 3 propagates through the addition up to position 5 and the last 3 bits are not toggling so they are masked. This relatively simple logical procedure can be custom synthesized in a combinatorial logic block. This scheme is applied only when needed for a newly created address, in a dynamic way. This one-hot encoder option has the additional advantage that no address decoder is required any longer between the one-hot encoded shifted address and the memory array.

The above is similar to ECC hardware schemes applied to (large) SRAM caches in that it relies on parity check codes for reporting faulty rows or lines. A state-of-the-art example of this is the reliability-oriented Pellston cache technology of Intel. There are however clear differences because the approach proposed here does not rely in any way on tagged cache lines which can be "disabled". Instead, it exploits the one-hot encoding properties, as shown above.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method of managing the operation of a digital synchronous electronic system with a guaranteed lifetime, using digital processing means, by exploiting task information of a dynamic application running on said electronic system, said task information being derived from a system model, said system model comprising

   - deterministic upper bound curves of one or more guaranteed objectives in a multi-dimensional design space as a function of time evolution of tasks of said application, said upperbound curves being parameterized in terms of the application workload and environmental conditions, and
   - probabilistic or analytical estimates of one or more cost functions of said time evolution of said tasks of said application, said estimates being parameterized in terms of the application workload and environmental conditions,
   the method comprising the steps of :
   - monitoring at run time said electronic system, while said electronic system executes in a current system working mode a set of tasks of said application currently running on said electronic system,
   - detecting a violation in at least one parameter of said electronic system, said violation affecting said one or more guaranteed objectives and/or said one or more cost functions,
   - selecting at least one condition for revising said current system working mode of said electronic system and, if said at least one condition is met, selecting a revised system working mode for continued execution of said set of application tasks while remaining within limits imposed by said upper bound curves, while reducing a parametric error rate as a function of said parameters, whereby said revised system working mode is selected among a set of possible system working modes based on a prediction of future application workload and/or environmental conditions.

2. Method of managing as in claim 1, wherein selecting said revised system working mode is performed while also optimizing at least one of said cost functions based on said probabilistic or analytical estimates of said at least one cost function.

3. Method of managing as in any of claims 1 or 2, wherein each task of said application has a look-up table for said guaranteed objectives, whereby entries in said look-up table define a set of possible task working modes for executing said task of said application and whereby selecting said at least one condition for revising is based on said entries in said look-up tables.

4. Method of managing as in claim 3, wherein at least one of said look-up tables contains an extreme task working mode which can be selected at run time depending on timing, thermal and/or reliability constraints of the electronic system using predefined models at design time.

5. Method of managing as in any of claims 3 or 4, wherein said revised system working mode is selected based on said prediction of future application workload and/or environmental conditions after checking whether said one or more guaranteed objectives are met and if so, selecting another point in said at least one look-up table for said guaranteed objectives of a task of said application such that a value on a guaranteed objective axis is decreased or increased based on their potential to optimize the cost.

6. Method of managing as in claim 5, wherein for at least one task of said application a future point in time is determined where slack is available to improve at least one guaranteed objective and where moving said slack to the current point in time improves most one or more cost functions.

7. Method of managing as in any of the previous claims, wherein reducing said parametric error rate is performed with a feedback controller.

8. Method of managing as in any of the previous claims, followed by a step of mitigating a remaining 0/1 bit fault in a memory by monitoring a parity bit detection and applying a roll-back scheme to correct said bit fault.

9. Method of managing as in any of the previous claims, wherein said detected violation is at least in part due to cycle overhead.

10. Method of managing as in any of the previous claims, comprising a step of performing at run-time mitigation of an error caused by process variations at fabrication time.

11. Method of managing as in claim 10, wherein said process variations are accounted for by adapting a one-hot encoded address in a memory.

12. Method of managing as in in any of claims 3 to 11, wherein in order to optimize the cost functions within the guaranteed constraints a processor-level proportional-integral-derivative, PID, controller computes a rate divergence slack, indicating the amount of time slack that the current working point is away from the parametric time constraint, said rate divergence slack being affected by cycle overhead.

13. Method of managing as in any of the previous claims, further comprising a temporary extreme acceleration to optimizing said at least one cost function and to ease meeting said at least one guaranteed objective.

14. Program, executable on a programmable device, containing instructions which, when executed, perform the method as in any of the previous claims.

15. Digital synchronous electronic system having a guaranteed lifetime and adapted for running a dynamic application, thereby exploiting task information of said application derived from a system model, said system model comprising both deterministic upper bound curves of one or more guaranteed objectives in a multi-dimensional space as a function of time evolution of tasks of said application, said upperbound curves being parameterized in terms of the application workload and environmental conditions, and probabilistic or analytical estimates of one or more cost functions of said time evolution of said tasks of said application, said estimates being parameterized in terms of the application workload and environmental conditions,
said electronic system comprising

- digital processing means,
- monitoring means for run-time monitoring of said electronic system, while said electronic system executes in a current system working mode a set of tasks of said application currently running on said electronic system,
- detection means for detecting a violation in said electronic system, said violation affecting said one or more guaranteed objectives and/or said one or more cost functions,
- a selection module for selecting one condition for revising said current working mode of said electronic system and for selecting, if said at least one condition is met, a revised system working mode for continued execution of said set of application tasks while remaining within limits imposed by said upper bound curves, while reducing a parametric error rate as a function of said parameters, whereby said revised system working mode is selected among a set of possible system working modes based on a prediction of future application workload and/or environmental conditions.

**Fig.1**

**Fig.2**

| Worst-case device<br>(e.g. BTI) Impact (Vt) | Worst-case wire<br>(e.g. TDDB) Impact (R,C) |
|---|---|

⬇ ⬇

| Worst-case electrical and life time characteristics |
|---|

⬇

| DRC rules tightened pessimistically (device W/L; wire W) |
|---|

⬇

| Scaling gains reduced or stopped unnecessarily early |
|---|

**Fig.3**

| Workload dependent<br>device impact | Workload dependent<br>wire impact |
|---|---|

⬇ ⬇

| Run-time subtask scheduler (on-line control) |
|---|

⬇

| Real-case electrical and life time characteristics |
|---|

⬇

| Scaling gains maximized, hence longest scaling |
|---|

**Fig.4**

Workload

Application
(deadlines, workload, etc)

System Knobs

Controller
finds optimal knob
and mapping settings

Platform

Distributed
energy vs delay
measurement

Energy

constraint

Energy-efficient
but slow

Application time
deadline violation

Fast but
power-hungry

Time

Under dynamic application
deadlines and hardware
status

**Fig.5**

Critical factors (Performance)

Proactive

Reactive
guarantee

Reactive
best effort

Time (scale of years)

**Fig.8**

**Fig.6**

**Fig.7**

**Fig.9**

**Fig.10**

**Fig.11**

**Fig.13**

(a) PVF increase    (b) DVF converging to zero

(c) Slack converging to zero    (d) Frequency multipliers

**Fig.12**

**Fig.14**

start → deadline OK in the backup scenario? → **Yes** → lowest V$_{dd}$ → delay or increased errors?

decrease V$_{dd}$ — **No**

delay or increased errors? — **Yes** → increase V$_{dd}$

deadline OK in the backup scenario? — **No** → DoS or Execution without Guarantees

**Fig.15**

Energy

gaz pedal

Delay

**Fig.16**

Quality cost

Static performance variability mitigation

Performance variability mitigation with dynamic scenarios

Time

**Fig.17**

**System Load**

**Fig.18**

Input driver and write amplifier

Cell array

Sense amplifier or output driver

Unchanged

Original address (adapted to updated address after $1^{st}$ write)

Parity bit register

Combinational logic with adapted address computation

Only activated when new write address required

Adapted hardware

**Fig.19**

Europäisches
Patentamt
European
Patent Office
Office européen
des brevets

# EUROPEAN SEARCH REPORT

Application Number

EP 14 19 8876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 219 112 A2 (IMEC [BE]; UNIV LEUVEN KATH [BE]) 18 August 2010 (2010-08-18) <br> * abstract * <br> * paragraph [0005] - paragraph [0006] * <br> * paragraph [0009] - paragraph [0015] * <br> * paragraph [0018] * <br> * paragraph [0027] - paragraph [0033] * <br> * paragraph [0060] - paragraph [0068] * <br> ----- | 1-15 | INV. <br> G06Q10/04 |
| A | US 2011/093724 A1 (PARK JI-HWAN [KR] ET AL) 21 April 2011 (2011-04-21) <br> * abstract * <br> * paragraph [0024] - paragraph [0027] * <br> * paragraph [0032] - paragraph [0034] * <br> ----- | 1-15 | |
| A | YANG P ET AL: "Energy-aware runtime scheduling for embedded-multiprocessor SOCs", <br> IEEE DESIGN & TEST OF COMPUTERS, IEEE SERVICE CENTER, NEW YORK, NY, US, <br> 1 January 2001 (2001-01-01), pages 46-58, XP002356065, <br> ISSN: 0740-7475 <br> * the whole document * <br> ----- | 1-15 | |
| | | | TECHNICAL FIELDS SEARCHED (IPC) <br><br> G06Q <br> G06F |

The present search report has been drawn up for all claims

| Place of search | Date of completion of the search | Examiner |
|---|---|---|
| Munich | 18 June 2015 | Moltenbrey, Michael |

EPO FORM 1503 03.82 (P04C01)

## ANNEX TO THE EUROPEAN SEARCH REPORT
## ON EUROPEAN PATENT APPLICATION NO.

EP 14 19 8876

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2015

| Patent document cited in search report | | Publication date | Patent family member(s) | | Publication date |
|---|---|---|---|---|---|
| EP 2219112 | A2 | 18-08-2010 | EP 2219112 A2<br>US 2010191349 A1 | | 18-08-2010<br>29-07-2010 |
| US 2011093724 | A1 | 21-04-2011 | KR 20110043193 A<br>US 2011093724 A1 | | 27-04-2011<br>21-04-2011 |

EPO FORM P0459

For more details about this annex : see Official Journal of the European Patent Office, No. 12/82

EP 3 035 254 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2660722 A
- US 2010191349 A
- US 7831951 B
- EP 2509011 A

### Non-patent literature cited in the description

- **GUPTA et al.** StageNetSlice : A Reconfigurable Microarchitecture Building Block for Resilient CMP Systems. *CASES'08,* 2008
- **KIM et al.** Multi-bit error tolerant caches using two-dimensional error coding. *Proc. Int'l Symp. Microarchitecture (Micro-40),* 2007, 197-209
- **GUPTA et al.** DeCoR: A Delayed Commit and Rollback mechanism for handling inductive noise in processor. *IEEE 14th Int'l Symp. High Performance Computer Architecture,* 2008, 381-392
- **LUKASIEWYCZ.** Exploiting data-redundancy in reliability-aware networked embedded system design. *Proc. 7th IEEE/ACM Int'l Conf. Hardware/Software Codesign and System Synthesis,* 2009, 229-238
- **HARDY, D. et al.** The Performance Vulnerability of Architectural and Non-architectural Arrays to Permanent Faults. *IEEE/ACMMICRO,* December 2012, 48-59

27